# EUROPÄISCHE PATENTANMELDUNG

(11) **EP 1 081 315 A1**
(43) Veröffentlichungstag der Anmeldung: **07.03.2001**
(21) Anmeldenummer: 00119049.5
(22) Anmeldetag: 02.09.2000
(51) Int. Cl.: E05B 17/00, G01B 3/00

(54) **Profilzylindermessgerät**

(30) Priorität: 06.09.1999 DE 19942412
(71) Anmelder: Heidenreich, Toralf, 06258 Schkopau (DE)
(72) Erfinder: Heidenreich, Toralf, 06258 Schkopau (DE)
(74) Vertreter: Borchard, Wolfgang

(57) **Zusammenfassung**

Die Erfindung betrifft ein Profilzylindermeßgerät, das mindestens eine Skaleneinteilung zum Ablesen der Einbaulänge eines Schließzylinders für ein Sicherheitsschloß von Türen aufweist. Um die Auswahl eines passenden Profilschließzylinders für eine Tür mit einem Zylinderschloß wesentlich zu vereinfachen und die Nachteile des Standes der Technik zu vermeiden. Insbesondere im privaten Bereich soll die Bestimmung der Profilzylinderlänge kostengünstig und mit einfachen Mitteln fehlerfrei durchführbar gestaltet werden.
Das Profilzylindermeßgerät weist einen stabförmigen Grundkörper (1) mit einem Querschnittsprofil entsprechend einem Schließzylindergehäuse auf, wobei der mit mindestens einem Ableseelement mit einer Linearskaleneinteilung (2) mit einem Strichmaßstab versehene Grundkörper (1) mit einem zylindrischen Profilteil (3) und einem symmetrisch zur Mittellängsebene (4) radial sich erstreckenden Stegabschnitt (5) mit zwei parallel verlaufenden Seitenflächen (6) versehen, sowie mit einer die Stulpschraube des Schloßgehäuses aufnehmenden Gewindebohrung (7) ausgebildet ist.

## Beschreibung

Die Erfindung betrifft ein Profilzylindermeßgerät, das mindestens eine Skaleneinteilung zum Ablesen der Einbaulänge eines Schließzylinders für ein Sicherheitsschloß von Türen aufweist.

In dem Deutschen Gebrauchsmusters 84 05 911 wird ein Einbausatz zur Längen - und Typenbestimmung von Profilzylindern beschriebenen, der aus einem Bausatz von einem Bauschlüssel und einem Meßschlüssel besteht. Der Bauschlüssel weist einen Schlüsselschacht und einen davon abstehenden Schließzapfen auf, der am freien Ende mit einem Vierkant versehen ist. Das Vierkant des Bauschlüssel ist zweckmäßig so dimensioniert, daß es in die Einbauöffnung des Schlosses paßt.

Der Meßschlüssel besteht aus einem Tragkörper mit einer dem Vierkantprofil des Bauschlüssels angepaßten Vierkantöffnung. Am Tragkörper ist eine ebene Stützfläche ausgebildet, auf der eine Meßzunge mit einem L ― förmigen Querschnitt geführt ist. Die Meßzunge weist an einem Ende einen davon abgewickelten Meßschenkel auf. Auf dieser Meßzunge ist eine weitere Meßzunge an der Kante des kürzeren L - Schenkels geführt, die ebenfalls an einem Ende einen davon abgewinkelten Meßschenkel trägt. Beide Meßzungen besitzen miteinander deckungsgleiche Meßschlitze, durch die sich eine von der Stützfläche des Tragkörpers ausgehende Nase erstreckt.

Der Schaft des Bauschlüssels kann in das Profilzylinderloch des eingebauten Schlosses eingeführt werden, bis der Schließzapfen die dafür vorgesehene Lage in der Schloßtiefe erreicht hat. Durch Drehen des Schlüssels um 90 Grad nach rechts oder links kann an der Markierung des Schaftes die für diese Türseite maßgebende Länge des Profilzylinders abgelesen werden. Die gleiche Arbeit wird dann von der anderen Seite der Tür durchgeführt. Nachteilig ist, daß die Vorrichtung in der Art einer Schiebelehre vergleichsweise aufwendig hergestellt ist. Darüber hinaus sind mindestens zwei Meßvorgänge erforderlich, durch die der Aufwand zum Feststellen der Größe des Profilzylinders erhöht wird.

Das Deutsche Gebrauchsmuster 85 02 220 betrifft in ähnlicher Weise eine Meßlehre zum Bestimmen der Länge von Schließzylindern bei Türen, die mit unterschiedlichen Türblattdicken ausgebildet und verschiedenen Beschlagabmessungen versehen sind. Die Meßlehre besteht aus einem T ― förmig profilierten Tragkörper mit einem Mittelsteg, der mit beidseitig versehenen Schrägflächen versehen und zum Beobachten der Zentrierlage in Höhe der Schloßfalle mit einem Sichtfenster ausgebildet ist. Um eine fehlerfreie Messung vorzunehmen, muß der Mittelsteg in der stulpseitig gelegenen Schraubenlochsenkung für die zu dem Schließzylinder gehörende Zentrierschraube befestigt werden. Auf beidseitig sich erstreckenden Tragschenkeln sind verschiebbare Meßschenkel gelagert, die zu ihren Füßen mit einem Beobachtungsfenster für eine Meßskala versehen sind. Außerdem müssen die Meßschenkel mit einem Exzenter drehverstellbare Anlageteller aufweisen, damit bei einer gegenüber dem Türblatt breiteren Schloßfalle der Meßvorgang durchgeführt werden kann. Um die Abmessungen des Schließzylinders zu ermitteln, sind auf diese Weise verschiedene Meßvorgänge erforderlich. Die Meßlehre ist daher nur für den geübten Fachmann fehlerfrei handhabbar und aufgrund ihrer aufwendigen Herstellung für den privaten Einsatz weniger gut geeignet.

Um den in der Praxis auftretenden Problemen entgegenzutreten, wurde aus diesem Grunde in der EP 787 872 A1 für einen Profilschließzylinder eine Verlängerungsscheibe vorgesehen, die mit zusätzlichen Schrauben an der Stirnseite des Profilschließzylinders angebracht wird. Auf diese Weise soll bei den mit der Montage vor Ort befaßten Unternehmen der Fall verhindert werden, daß der im zentralen Lager ausgewählte Schließzylinder eine zu geringe Einbaulänge aufweist, so daß der flächenbündige Einbau mit dem Türblatt oder den Beschlagteilen nicht gewährleistet ist. Diese Lösung ist offensichtlich für den privaten Einsatz nicht geeignet, weil während des Einbaus eine hinreichende Anzahl von Verlängerungsscheiben vorzuhalten ist. Außerdem können derartige zusätzliche Verlängerungsscheiben nur in Verbindung mit einem Schlüssel realisiert werden, der einen extra langen Schaft aufweist. Schließlich bietet die vorgeschlagene Lösung keine Abhilfe, wenn der vorhandene Profilzylinder zu groß ausgewählt worden ist.

Die Erfindung bezweckt die Auswahl eines passenden Profilschließzylinders für eine Tür mit einem Zylinderschloß wesentliche zu vereinfachen und die Nachteile des Standes der Technik zu vermeiden. Insbesondere im privaten Bereich soll die Bestimmung der Profilzylinderlänge ohne den Gebrauch der oben genannten Meßlehren kostengünstig und mit einfachen Mitteln fehlerfrei durchführbar gestaltet werden.

Erfindungsgemäß wird die Aufgabe durch ein Profilzylindermeßgerät gelöst, das einen stabförmigen Grundkörper mit einem Querschnittsprofil entsprechend einem Schließzylindergehäuse aufweist. Das Profilzylindermeßgerät ist unter geringfügigen Herstellungskosten problemlos herstellbar. Der Grundkörper wird mit einem einfachen Ableseelement mit einer Linearskaleneinteilung mit einem Strichmaßstab versehen. Die Länge ist variabel. Das Profilzylindermeßgerät kann auf diese Weise zum Ablesen der Breite eines Türblattes beziehungsweise zum Ermitteln der Abmessungen eines Schließzylinders eingesetzt werden. Das Profilzylindermeßgerät weist hierzu entsprechend einem Schließzylinder einen sich symmetrisch zur Mittellängsebene radial sich erstreckenden Stegabschnitt und eine die Stulpschraube des Schloßgehäuses aufnehmende Gewindebohrung auf. Die Handhabung des Profilzylindermeßgerätes ist daher denkbar einfach und von jeder ungeübten Person sicher zu bewerkstelligen. Das Ermitteln der zutreffenden Abmessung des Schließzylinders beschränkt sich auf das Einsetzen des Profilzylindermeßgerätes anstelle des Schließzylinders und auf das Ablesen des Strichmaßstabes. Die korrekte Abmessung kann durch einfache Subtraktion der Meßwerte gefunden werden. Hierbei sind Fehlerquellen ausgeschlossen.

Nach einer bevorzugten Ausgestaltung der Erfindung ist die Gewindebohrung mittig zwischen den Stirnseiten des Profilzylindermeßgerätes positioniert, wobei ein beidseitig von der Mittellinie der Gewindebohrung ausgehender Strichmaßstab mit Millimetereinteilung vorgesehen ist. Die zutreffende Länge des Schließzylinders kann durch Addition der beiden Meßwerte ermittelt werden, die auf dem Strichmaßstab abgelesen werden.

Nach einer weiteren Ausgestaltung der Erfindung kann der Strichmaßstab wahlweise auf den Seitenflächen des Stegabschnittes angeordnet werden, um das Anbringen des Strichmaßstabes bei der Herstellung des Profilzylindermeßgerätes zu vereinfachen.

Nach einer anderen Ausgestaltung der Erfindung kann auf den Seitenflächen des Stegabschnittes eine schriftliche oder bildliche Werbebotschaft vorgesehen werden, mit deren Hilfe Schließzylinder mit unterschiedlichen Abmessungen verschiedenen Herstellern zugeordnet werden können. Dadurch kann die Vielfalt des Angebots bei Schließzylindern ohne die Gefahr von Verwechslungen erhöht und gleichzeitig der Einbau wesentlich vereinfacht werden.

Die Erfindung soll nachstehend an einem Ausführungsbeispiel näher beschrieben werden. Weitere Merkmale ergeben sich aus den Zeichnungen, die in der nachstehenden Beschreibung näher erläutert werden.

In den Zeichnungen zeigen
Figur 1 eine perspektivische Darstellung des Profilzylindermeßgerätes.
Figur 2 eine Seitenansicht des Profilzylindermeßgerätes und
Figur 3 einen Querschnitt A ― A durch das Profilzylindermeßgerät in Höhe der Gewindebohrung in schematischer Darstellung.

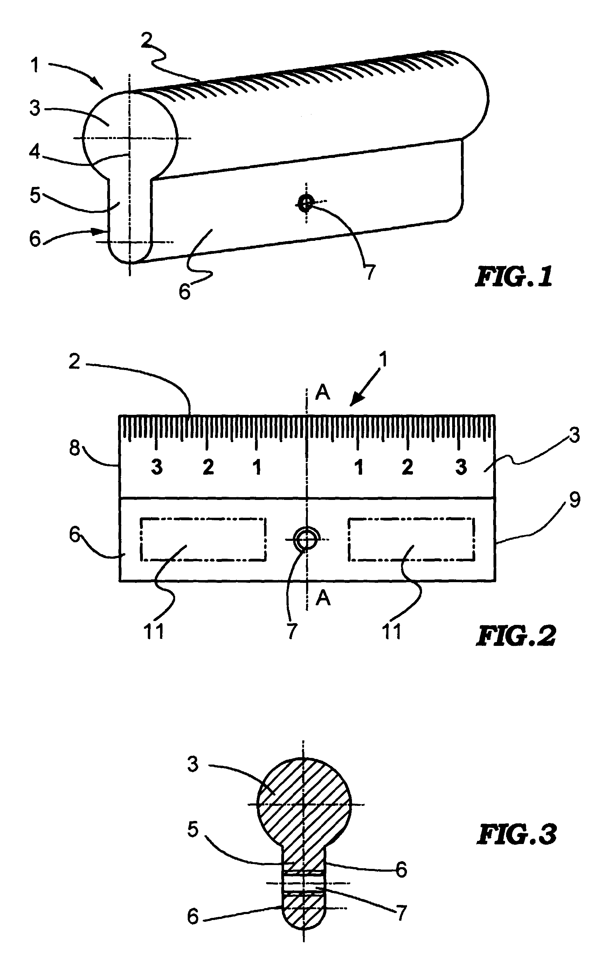

Das Profilzylindermeßgerät besteht gemäß Figur 1 aus einen stabförmigen Grundkörper 1, der mit einem einfachen Ableseelement mit einer Linearskaleneinteilung 2 mit einem Strichmaßstab versehen und mit einem Querschnittsprofil entsprechend einem Schließzylindergehäuse ausgebildet ist. Der Grundkörper 1 ist mit einem zylindrischen Profilteil 3 und einem symmetrisch zur Mittellängsebene 4 radial sich erstreckenden Stegabschnitt 5 mit zwei parallel verlaufenden Seitenflächen 6 versehen. Nach Figur 3 wird der Grundkörper 1 aus einem vollen Materialquerschnitt gefertigt, der technologisch einfach durch Ziehen, Walzen oder Extrudieren von langen Werkstücken und durch Ablängen der gewünschten Abschnitte hergestellt werden kann. Außerdem können einzelne oder mehrere Grundkörper mittels Druckguß oder Spritzguß hergestellt werden.

Zum Anschlagen des Profilzylindermeßgerätes ist der Stegabschnitt 5 mit einer die Stulpschraube des Schloßgehäuses aufnehmenden Gewindebohrung 7 versehen. Die Gewindebohrung 7 besitzt exakt die gleiche Abmessung wie das Gewinde für die Stulpschraube des später einzubauenden Schließzylinders. Die Gewindebohrung 7 ist mittig zwischen der linken Stirnseite 8 und der rechten Stirnseite 9 des Grundkörpers 1 angeordnet. Auf diese Ausführungsform soll die Erfindung jedoch nicht beschränkt werden. Abweichend von der in der Zeichnung dargestellten Ausführungsform kann das Profilzylindermeßgerät mit einem nicht weiter dargestellten Anschlag an einer Stirnseite 8, 9 und einer einfachen Skala versehen werden, mit der die Einbaulänge des Schließzylinders oder die Stärke eines Türblattes ermittelt werden kann.

Nach Figur 2 ist eine Linearskaleneinteilung 2 mit einem Strichmaßstab vorgesehen, der sich beidseitig zu der mittig angebrachten Gewindebohrung 7 bis zu den Stirnseiten 8, 9 des Profilzylindermeßgerätes erstreckt. Der Strichmaßstab 2 ist mit einer Millimetereinteilung versehen, die ein genaues Ablesen der Abmessungen für den Schließzylinder gewährleistet.

Die Fertigung der Teilung des Strichmaßstabes 2 ist abhängig von der Wahl des Werkstoffes für den Grundkörper 1. Bei Verwendung von Stahl, Messing, Aluminium oder Kunststoffen kann die Skaleneinteilung durch Reißen oder Ätzen mit Strichabständen kleiner als 0,5 mm hergestellt werden. Die Striche müssen senkrecht stehen, den richtigen Abstand, gleichmäßige Dicke und Länge haben. Strichfurchen können mit einem farbigen Lack zur Erhöhung der Ablesbarkeit ausgefüllt werden. Auf diese Weise kann eine Schätzung der Meßwerte bis auf ein Zehntel mit ausreichender Sicherheit ermöglicht werden. Die Ermittlung der Abmessungen des Schließzylinders kann daher besonders genau vorgenommen werden. Bei Einsatz von Holz oder Pappe kann der Strichmaßstab durch einen Druckvorgang hergestellt werden, wenn das Ablesen hinreichend genau vorgenommen werden muß.

Nach Figur 1 und Figur 2 kann die Linearskaleneinteilung 2 auf dem zylindrischen Profilteil 3 des Grundkörpers 1 angebracht werden. Wenn es technologisch günstiger ist, kann die Linearskaleneinteilung 2 auf den Seitenflächen 6 des Stegabschnittes 5 angeordnet werden. Bevorzugt wird jedoch die in Figur 2 dargestellte Ausführungsform des Profilzylindermeßgerätes, bei dem auf den strichpunktiert dargestellten Flächen 11 eine schriftliche oder bildliche Werbebotschaft vorgesehen wird. Wenn die strichpunktiert gezeichneten Flächen 11 den Namen des Herstellers oder Verkäufers für den Schließzylinder aufweisen, kann eine einfache und zielgerichtete Auswahl des Schließzylinders nach Länge und Typ getroffen werden. Das Profilzylindermeßgerät kann daher vom Fachhandel gezielt dem unkundigen Käufer bereitgestellt werden, damit dieser fehlerfrei die zutreffende Abmessung des Schließzylinders für ein Sicherheitsschloß bestimmen kann.

## Patentansprüche

1. Profilzylindermeßgerät mit mindestens einer Skaleneinteilung zum Ablesen der Einbaulänge eines Schließzylinders für ein Sicherheitsschloß von Türen, dadurch gekennzeichnet, daß das Profilzylindermeßgerät einen stabförmigen Grundkörper (1) mit einem Querschnittsprofil entsprechend einem Schließzylindergehäuse aufweist, wobei der mit mindestens einem Ableseelement mit einer Linearskaleneinteilung (2) mit einem Strichmaßstab versehene Grundkörper (1) mit einem zylindrischen Profilteil (3) und einem symmetrisch zur Mittellängsebene (4) radial sich erstreckenden Stegabschnitt (5) mit zwei parallel verlaufenden Seitenflächen (6) versehen sowie mit einer die Stulpschraube des Schloßgehäuses aufnehmenden Gewindebohrung (7) ausgebildet ist.

2. Profilzylindermeßgerät nach Anspruch 1, dadurch gekennzeichnet, daß die Gewindebohrung (7) mittig zwischen den Stirnseiten (8, 9) des Profilzylindermeßgerätes positioniert und ein beidseitig von der Mittellinie der Gewindebohrung (7) ausgehender Strichmaßstab mit Millimetereinteilung vorgesehen ist.

3. Profilzylindermeßgerät nach Anspruch 1 bis 2, dadurch gekennzeichnet, daß die Linearskaleneinteilung (2) wahlweise auf den Seitenflächen (6) des Stegabschnittes (5) angeordnet ist.

4. Profilzylindermeßgerät nach Anspruch 1 bis 3, dadurch gekennzeichnet, daß die Seitenflächen (6) des Stegabschnittes (5) mit schriftlichen oder bildlichen Werbebotschaften versehen sind.

5. Profilzylindermeßgerät nach Anspruch 1 bis 4, dadurch gekennzeichnet, daß das Profilzylindermeßgerät aus Metall, Kunststoff, Holz, Pappe oder Papier besteht.
